# EUROPÄISCHE PATENTANMELDUNG

(11) **EP 1 081 246 A1**
(43) Veröffentlichungstag der Anmeldung: **07.03.2001**
(21) Anmeldenummer: 99810743.7
(22) Anmeldetag: 18.08.1999
(51) Int. Cl.: C22C 49/02, B29C 70/02

(54) **Faserverbundwerkstoff**

(71) Anmelder: SULZER INNOTEC AG, CH-8401 Winterthur (CH)
(72) Erfinder: Vodermayer, Albert, Dr., 8305 Dietlikon (CH)
(74) Vertreter: Sulzer Management AG

(57) **Zusammenfassung**

Der Faserverbundwerkstoff umfasst eine Mehrzahl von Fasersträngen und mindestens zwei Matrixkomponenten unterschiedlicher Werkstoffklassen, die unterschiedliche thermomechanische Eigenschaften aufweisen und mittels einer Druckimprägnierung mit den Fasersträngen verbunden sind, wobei die Matrixkomponenten kurzzeitig in flüssiger Form vorliegen, um die Fasern zu benetzen.

Der Werkstoff ist bei gleichbleibender Verformbarkeit in Hinsicht auf die Druckfestigkeit und die Möglichkeit mit anderen Werkstoffen verklebt zu werden erheblich verbessert.

## Beschreibung

Die Erfindung betrifft einen Faserverbundwerkstoff mit mindestens einer Faserkomponente.

Derartige Verbundstoffe weisen mehrere Faserstränge und eine Matrix aus vernetzenden oder nicht vernetzenden Kunststoffen auf.

Bei der Herstellung eines Verbundwerkstoffes mit einer thermoplastischen Matrix werden die Faserstränge in einem Bad mit einer Dispersion aus Wasser und Polymerpartikeln getränkt. Dabei verteilen sich die Partikel gleichmässig zwischen den Faserfilamenten. Anschliessend wird das von den Fasersträngen aufgenommene Wasser in einem Trocknungsverfahren verdampft. Nachfolgend werden die in den Fasersträngen verteilten Polymerpartikel aufgeschmolzen, wobei sich diese gleichmässig in den Fasersträngen verteilen. Eine vollständige Benetzung erfolgt zwischen paarweise angeordneten Walzen, wobei gleichzeitig eine Abkühlung und ein Aushärten der Matrix stattfindet.

Bei diesem Werkstoff wird die geringe Druckfestigkeit in Faserrichtung und die schlechtere Verklebbarkeit mit anderen Werkstoffen als nachteilig angesehen.

Der Erfindung liegt die Aufgabe zugrunde einen Verbundwerkstoff zu verbessern.

Diese Aufgabe wird erfindungsgmäss mit den Merkmalen des Anspruches 1 gelöst.

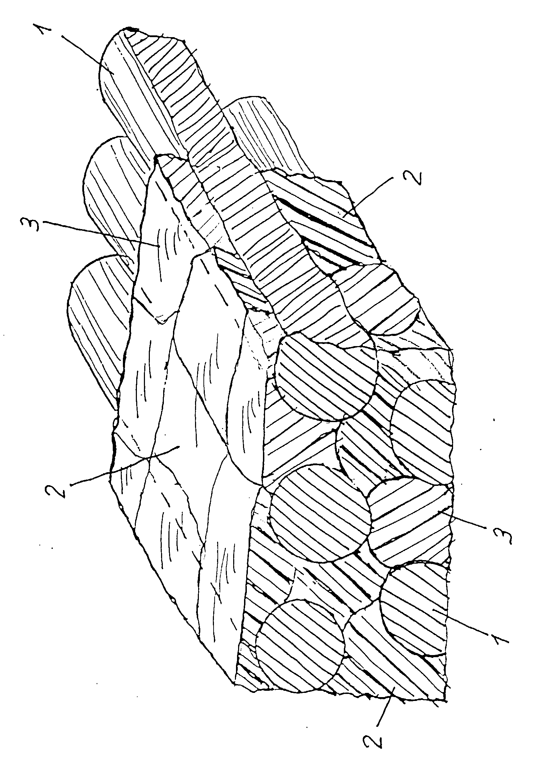

Nachfolgend wird die Erfindung anhand der beiliegenden Figur erläutert.

Die einzige Figur zeigt einen Abschnitt einer Ausführungsform eines erfindungsgemässen Faserverbundwerkstoffes in räumlicher Darstellung.

Der Faserverbundwerkstoff wird auf der Grundlage des vorstehend beschriebenen Herstellungsverfahren aus einer Mehrzahl von Fasersträngen 1 sowie Partikeln aus einem Thermoplast 2 und einem Duroplast 3 hergestellt. Bei einer bevorzugten Ausführung werden Fasermaterial aus Kohlenstoff, Partikel aus Polyamid und Partikel aus warmhärtendem Epoxyharz verwendet. Die Faserstränge werden in einem Bad mit den Partikeln aus Polyamid und Epoxyharz imprägniert, wobei der Anteil des Epoxyharz bezogen auf den Kunststoffanteil im Bereich von 0,1 bis 30 Vol% liegen kann. Bei der Imprägnierung können die Partikel aus Polyamid und Epoxyharz auch getrennt von einander angewendet werden. Es ist von Vorteil, wenn ein Tensid zur Herabsetzung der Oberflächenspannug des Wassers verwendet wird. Nach der Verdampfung des Wassers erfolgt im nachgeschalteten Ofen die Verbindung der drei Komponenten. Durch die Erwärmung werden die Partikel aus Polyamid und Epoxyharz aufgeschmolzen und breiten sich durch die Kapillarwirkung zwischen den Fasersträngen aus und benetzen diese. Das Epoxyharz härtet aus während das Polyamid für die Konsolidierung weich bleibt. Während der Konsolidierung wird das Polyamid abgekühlt.

Wie die Figur zeigt, wird ein Körper erzeugt, bei dem die Thermoplastpartikel 2 und Duroplastpartikel 3 untereinander und mit den Fasersträngen 1 verbunden und an dessen Oberfläche Bereiche aus Thermoplast und Duroplast ausgebildet sind. Aufgrund der Bereiche aus Duroplast kann der Körper mittels Kleben mit anderen Körper verbunden werden. Aufgrund der Tatsache, dass der Duroplast auch die Fasern benetzt und einen höheren Modul hat, wird eine höhere Druckfestigkeit in Faserrichtung erreicht.

Es ist auch möglich nach dem Aufschmelzen die flüssige Form der Matrices beizubehalten, diese zu verpressen und die flüssigen Matrices abzukühlen und mindestens eine oder beide zu verfestigen.

Bei einer zweiten Ausführung des Faserverbundwerkstoffes werden neben den Fasersträngen, eine erste Matrixkomponente aus Thermoplast, z.B. Polyimid und eine zweite Matrixkomponente aus Metall, z.B. Aluminiumlegierungen verwendet.

Bei einer dritten Ausführung des Faserverbundwerkstoffes werden neben den Fasersträngen, eine erste Matrixkomponente aus Metall, z.B. Aluminiumlegierungen und eine zweite Matrixkomponente aus Duroplast verwendet.

Bei einer vierten Ausführung des Faserverbundwerkstoffes werden neben den Fasersträngen, eine erste Matrixkomponente aus Thermoplast, eine zweite Matrixkomponente aus Duroplast und eine dritte Matrixkomponente aus Metall verwendet.

Nachzutragen ist noch, dass anstelle von Duroplast andere vernetzende Kunststoffe verwendet werden können.

Der Faserverbundwerkstoff umfasst eine Mehrzahl von Fasersträngen sowie mindestens zwei Matrixkomponenten unterschiedlicher Werkstoffklassen, die unterschiedliche thermomechanische Eigenschaften aufweisen und mittels einer Druckimprägnierung mit den Fasersträngen verbunden sind, wobei die Matrixkomponenten kurzzeitig in flüssiger Form vorliegen, um die Fasern zu benetzen.

Der Werkstoff ist bei gleichbleibender Verformbarkeit in Hinsicht auf die Druckfestigkeit und die Möglichkeit mit anderen Werkstoffen verklebt zu werden erheblich verbessert.

## Patentansprüche

1. Faserverbundwerkstoff mit mindestens einer Faserkomponente gekennzeichnet durch mindestens zwei Matrixkomponenten unterschiedlicher Werkstoffklassen, die unterschiedliche thermomechanische Eigenschaften aufweisen und die mittels Druckimprägnierung verbunden sind, wobei die Matrixkomponenten verflüssigbar sind, um die Fasern zu benetzen.

2. Faserverbundwerkstoff nach Anspruch 1 gekennzeichnet durch eine erste Matrixkomponente aus Thermoplast und eine zweite Matrixkomponente aus Duroplast.

3. Faserverbundwerkstoff nach Anspruch 1 gekennzeichnet durch eine erste Matrixkomponente aus Thermoplast und eine zweite Matrixkomponente aus Metall.

4. Faserverbundwerkstoff nach Anspruch 1 gekennzeichnet durch eine erste Matrixkomponente aus Duroplast und eine zweite Matrixkomponente aus Metall.

5. Faserverbundwerkstoff nach Anspruch 1, gekennzeichnet durch drei Matrixkomponenten, wobei die erste Matrixkomponente ein Thermoplast, die zweite Matrixkomponente ein Duroplast und die dritte ein Metall ist.
